# EUROPEAN PATENT APPLICATION

(11) **EP 3 581 626 A1**
(43) Date of publication of application: **18.12.2019**
(21) Application number: 18751086.2
(22) Date of filing: 13.02.2018
(51) Int. Cl.: C09D 11/322, B41J 2/01, B41M 5/00

(54) **INKJET INK COMPOSITION, RECORDED MATTER AND IMAGE RECORDING METHOD**

(30) Priority: 13.02.2017 JP 2017024052
(71) Applicant: FUJIFILM Corporation, Tokyo 106-8620 (JP)
(72) Inventor: KIYOTO, Naoharu, Ashigarakami-gun Kanagawa 258-8577 (JP); HARADA, Motoi, Ashigarakami-gun Kanagawa 258-8577 (JP); MAKUTA, Toshiyuki, Ashigarakami-gun Kanagawa 258-8577 (JP)
(74) Representative: Klunker IP Patentanwälte PartG mbB
(86) International application number: PCT/JP2018/004943
(87) International publication number: WO 2018/147468

(57) **Abstract**

Provided are an ink jet ink composition including tabular metal nanoparticles having an average aspect ratio of 3 or greater, which is a ratio of an average equivalent circle diameter to an average thickness, a silicon compound, and water; a recorded material; and an image recording method.

## Description

### BACKGROUND OF THE INVENTION

### 1. Field of the Invention

The present disclosure relates to an ink jet ink composition, a recorded material, and an image recording method.

### 2. Description of the Related Art

In the related art, an ink jet ink containing metal particles and an ink set have been known.

For example, as a metallic ink that improves fixation, wear and abrasion resistance, and flexibility of an ink jet type address electrode and a bus electrode, a metallic ink for ink jet printing of a conductive line which contains dispersed metal nanopowder and a solvent and also containing at least one selected from the group consisting of wear and abrasion resistant-promoting nanoparticles or a flexibility-promoting polymer has been known (for example, see JP2006-241455A).

Further, as an ink set which suppresses unevenness and bleeding, enables a recorded material having excellent brilliance to be obtained, and is capable of shortening the drying time even in a recording medium with low smoothness, an ink set containing a treatment agent and a bright pigment ink, in which the treatment liquid contains fumed silica, and the bright pigment ink contains a bright pigment, water, and a urethane resin, has been known (for example, see JP2015-193721A).

### SUMMARY OF THE INVENTION

Meanwhile, an ink containing metal particles has been required to be able to record an image with excellent glossiness. Particularly in a case where an ink containing metal particles is used for recording a decorative image, it is desired that an image having extremely high glossiness, that is, specular glossiness can be recorded.

The present inventors found that it is effective to form metal particles in an ink into tabular metal nanoparticles in order to record an image having specular glossiness.

However, since tabular metal nanoparticles are metal particles having a sharp shape, in a case where the metal nanoparticles are brought into contact with an ink jet head member (such as a base material, a protective film, or a liquid-repellent film; the same applies hereinafter), the ink jet head member tends to be damaged. In a case where an ink jet head member is damaged, jetting failure easily occurs, and stable jetting is unlikely to be carried out in some cases.

An object of an embodiment of the present invention is to provide an ink jet ink composition which has excellent reliability for jetting from a nozzle of an ink jet head and enables an image having specular glossiness to be recorded.

An object of another embodiment of the present invention is to provide a recorded material comprising an image with specular glossiness, and an image recording method using the ink jet ink composition.

The means for achieving the above-described objects includes the following aspects.
<1> An ink jet ink composition comprising: tabular metal nanoparticles having an average aspect ratio of 3 or greater, which is a ratio of an average equivalent circle diameter to an average thickness; a silicon compound; and water.
<2> The ink jet ink composition according to <1>, in which an average equivalent circle diameter of the tabular metal nanoparticles is in a range of 10 nm to 500 nm.
<3> The ink jet ink composition according to <1> or <2>, in which the average aspect ratio of the tabular metal nanoparticles is 10 or greater.
<4> The ink jet ink composition according to any one of <1> to <3>, in which the tabular metal nanoparticles contain at least one metal element selected from the group consisting of silver, gold, and platinum.
<5> The ink jet ink composition according to any one of <1> to <4>, in which the tabular metal nanoparticles contain silver.
<6> The ink jet ink composition according to any one of <1> to <5>, in which a content of the tabular metal nanoparticles is in a range of 1% by mass to 8% by mass with respect to a total amount of the ink jet ink composition.
<7> The ink jet ink composition according to any one of <1> to <6>, in which the silicon compound contains colloidal silica.
<8> The ink jet ink composition according to any one of <1> to <7>, in which a content of the silicon compound is in a range of 0.01% by mass to 3% by mass with respect to a total amount of the ink jet ink composition.
<9> The ink jet ink composition according to any one of <1> to <8>, further comprising: gelatin.
<10> The ink jet ink composition according to any one of <1> to <9>, which is used for recording a decorative image.
<11> A recorded material comprising: a base material; and an image which is disposed on the base material and contains tabular metal nanoparticles having an average aspect ratio of 3 or greater, which is a ratio of an average equivalent circle diameter to an average thickness, and a silicon compound.
<12> An image recording method comprising: a step of applying the ink jet ink composition according to any one of <1> to <10> onto a base material using a jet head containing silicon according to an ink jet method.

According to an embodiment of the present invention, it is possible to provide an ink jet ink composition which has excellent reliability for jetting from a nozzle of an ink jet head and enables an image having specular glossiness to be recorded.

According to another embodiment of the present invention, it is possible to provide a recorded material comprising an image with specular glossiness, and an image recording method using the ink jet ink composition.

### BRIEF DESCRIPTION OF THE DRAWINGS

Fig. 1 is a schematic cross-sectional view illustrating an example of an internal structure of an ink jet head.
Fig. 2 is a schematic view illustrating an example of arrangement of jetting holes in a nozzle plate.

### DESCRIPTION OF THE PREFERRED EMBODIMENTS

Hereinafter, examples of an ink jet ink composition, a recorded material, and an image recording method, to which the present invention has been applied, will be described. However, the present invention is not limited to the following embodiments, and modifications can be made as appropriate within the range of the purpose of the embodiments of the present invention.

Further, the numerical ranges shown using "to" in the present disclosure indicate ranges including the numerical values described before and after "to" as the minimum values and the maximum values.

In the numerical ranges described in a stepwise manner in the present disclosure, the upper limits or the lower limits described in certain numerical ranges may be replaced with the upper limits or the lower limits in other numerical ranges described in a stepwise manner. Further, in the numerical ranges described in the present specification, the upper limits or the lower limits described in certain numerical ranges may be replaced with values described in examples.

In the present disclosure, combinations of two or more preferable aspects are more preferable aspects.

In the present disclosure, the concentration or content of each component indicates the total concentration or total content of a plurality of kinds of materials in a case where a plurality of kinds of materials are present in the corresponding component.

In the present disclosure, the "steps" include not only independent steps but also steps whose intended purposes are achieved even in a case where the steps cannot be precisely distinguished from other steps.

In the present disclosure, the concept of "light" includes active energy rays such as y rays, β rays, electron beams, ultraviolet rays, visible rays, and infrared rays.

### [Ink jet ink composition]

An ink jet ink composition (hereinafter, also simply referred to as an "ink") according to the embodiment of the present disclosure includes tabular metal nanoparticles having an average aspect ratio of 3 or greater, which is a ratio of an average equivalent circle diameter to an average thickness, a silicon compound, and water.

The ink according to the embodiment of the present disclosure has excellent reliability for jetting from a nozzle of an ink jet head. Further, according to the ink according to the embodiment of the present disclosure, an image having specular glossiness can be recorded.

In the present disclosure, the expression "the reliability for jetting from a nozzle of an ink jet head is excellent" indicates that jetting failure is unlikely to occur in a case where an ink is repeatedly jetted from the nozzle of the ink jet head.

Further, in the present disclosure, the reliability for jetting from a nozzle of an ink jet head is also simply referred to as "jetting reliability".

The reason why the ink according to the embodiment of the present invention exhibits such effects is not clear, but the present inventors assumed as follows.

Since the ink according to the embodiment of the present invention contains tabular metal nanoparticles as metal particles, and the average aspect ratio of the tabular metal nanoparticles is 3 or greater, an image having specular glossiness can be recorded. According to the ink according to the embodiment of the present disclosure, the reason why an image having specular glossiness can be recorded is assumed that since the ink contains tabular metal nanoparticles as metal particles and the average aspect ratio of the tabular metal nanoparticles is 3 or greater, the aligning properties of the tabular metal nanoparticles are improved in the recorded image, scattering of light on a side surface (in other words, a surface other than two main planes) of each tabular metal nanoparticles is suppressed, and thus the specular gloss of the image can be realized.

For example, in a case where the shape of the metal particle is a shape other than the tabular shape such as a sphere or a cube, the specular glossiness of an image is considered to be degraded because of the impact of light scattering on the surface of the metal particle even in a case where an image having metal glossiness is obtained. Further, even in a case where the ink contains metal particles as tabular metal nanoparticles, the specular glossiness of an image is considered to be degraded in a case where the aspect ratio of the tabular metal nanoparticles is low because of degradation of the aligning properties of the tabular metal nanoparticles in an image at the time of being recorded and the impact of light scattering on a side surface (in other words, a surface other than two main planes) of each tabular metal nanoparticle.

Compared to the ink according to the embodiment of the present disclosure, the metallic ink described in JP2006-241455A is not an ink for recording an image but an ink used for ink jet printing of a conductive line. In other words, JP2006-241455A does not focus on recording an image. Therefore, recording an image having specular glossiness is not considered at all.

Further, it is considered that since the metal nanopowder contained in the metallic ink described in JP2006-241455A is in the form of spherical metal particles, an image having specular glossiness cannot be obtained because of the impact of light scattering on the surface of each metal particle even in a case where an image is recorded.

Further, the "average aspect ratio of the tabular metal nanoparticles" in the present disclosure indicates the ratio [average equivalent circle diameter/average thickness] of the average equivalent circle diameter to the average thickness in the tabular metal nanoparticles.

The methods of acquiring the average thickness, the average equivalent circle diameter, and the average aspect ratio will be described below.

The "specular glossiness of an image" in the present disclosure indicates glossiness high enough to reflect an object facing the image and is distinguished from simple metal gloss (for example, see "evaluation standards for specular glossiness (sensory evaluation) of an image" in examples described below).

In the present disclosure, the "specular glossiness of an image" is evaluated based on the 20° gloss value, the 60° gloss value, and the sensory evaluation (visual image evaluation).

As both of the values of the 20° gloss value and the 60° gloss value are increased, this indicates that the specular glossiness of an image is excellent.

Meanwhile, according to the tabular metal nanoparticles having an average aspect ratio of 3 or greater, an ink that enables an image with specular glossiness to be recorded can be realized. However, it was found that since the tabular metal nanoparticles have a sharp shape, an ink jet head member is scraped and worn at the time of the tabular metal nanoparticles coming into contact with the ink jet head member. In a case where the ink jet head member is scraped and worn, ink jetting failure tends to occur, and this results in degradation of jetting reliability.

Typically, the ink jet head member is formed in a state of containing silicon in most cases.

In a case where the ink according to the embodiment of the present invention contains tabular metal nanoparticles having an average aspect ratio of 3 or greater, a silicon compound, and water, the worn portion (a portion formed in a state of containing silicon) of the ink jet member which has been generated by the tabular metal nanoparticles is restored by the silicon compound in the ink at the time of formation of the ink jet head member in a state of containing silicon. As the result, it is assumed that occurrence of jetting failure is suppressed, and stabilized jettability is maintained.

Compared to the ink according to the embodiment of the present invention, the ink set described in JP2015-193721A is an ink jet obtained by combining a bright pigment ink containing silver particles with a treatment liquid containing fumed silica, and the ink does not contain the fumed silica. JP2015-193721A does not focus on the problem of the ink jet member being worn by metal particles and does not assume that the worn member is restored by silica.

Further, in a case where the ink jet head member is formed in a state of containing silicon, the portion formed in a state of containing silicon is eluted and eroded due to contact with the ink. In a case where the ink jet head member is eroded, the size and the jetting frequency of ink droplets at the time of jetting are changed and jetting failure may occur due to this change.

Since the ink according to the embodiment of the present disclosure contains a silicon compound and water, erosion of the portion of the ink jet head member which is formed in a state of containing silicon is suppressed.

Further, since the ink according to the embodiment of the present disclosure contains a silicon compound and water, degradation (in other words, decrease in the contact angle) of liquid repellency of the ink jet head member is suppressed.

Meanwhile, in a case where an image is recorded using an ink containing metal particles having a particle size less than or equal to the wavelength in a visible range, a tint is generated in the recorded image in some cases.

In the metal particles having a particle size less than or equal to the wavelength in a visible range, plasmon resonance occurs. Due to this plasmon resonance, metal particles absorb light having a specific wavelength in a visible range in some case. The tint is considered to be generated in the image recorded using the ink as the result of absorption of light having a specific wavelength in a visible range by the metal particles in the ink. Further, for example, in a case where the shape of the metal particles is a sphere or a cube, the tint is considered to be generated in the recorded image because the metal particles absorb light having a specific wavelength in a visible range.

On the contrary, the ink according to the embodiment of the present disclosure contains tabular metal nanoparticles as metal particles, and the average aspect ratio of the tabular metal nanoparticles is 3 or greater. Therefore, an image in which a tint is suppressed can be recorded.

In a case where metal particles having a tabular shape (tabular metal particles) are used, the absorption wavelength resulting from plasmon resonance can be controlled to be in an infrared range from a visible range even in a case where the plasmon resonance occurs due to a decrease in particle size. In a case where the aspect ratio of the tabular metal particles is increased, the absorption wavelength resulting from plasmon resonance becomes longer. In other words, it is considered that an image in which a tint is suppressed can be recorded using the ink according to the embodiment of the present disclosure because the absorption wavelength resulting from the plasmon resonance is in an infrared range, and the ink contains metal nanoparticles with a low absorbance in a visible light range.

In the present disclosure, the "tint of an image" is evaluated based on the metric saturation number.

As the metric saturation number is decreased, this indicates that the tint of the image is suppressed.

In addition, the above-described assumption is not intended to limitatively interpret the effects of the present invention, but explains the mechanism as an example.

Hereinafter, each component in the ink according to the embodiment of the present disclosure will be described in detail.

### [Tabular metal nanoparticles]

The ink according to the embodiment of the present disclosure contains tabular metal nanoparticles (hereinafter, also referred to as "specific tabular metal nanoparticles") having an average aspect ratio of 3 or greater which is a ratio of the average equivalent circle diameter to the average thickness.

The term "tabular" in the specific tabular metal nanoparticles indicates that each particle has two main planes.

The ink according to the embodiment of the present disclosure may contain only one or two or more kinds of specific tabular metal nanoparticles.

The shape of the specific tabular metal nanoparticles is not particularly limited as long as each particle is tabular, in other words, each particle has two main planes, and the shape thereof can be appropriately selected depending on the purpose thereof.

Examples of the shape of the specific tabular metal nanoparticles include a triangular shape, a square shape, a hexagonal shape, an octagonal shape, and a circular shape.

As the shape of the specific tabular metal nanoparticles, from the viewpoint of a low absorbance in a visible light range, a triangular or higher polygonal shape and a circular shape (hereinafter, also referred to as "triangular to circular shapes") are preferable.

The circular shape is not particularly limited as long as the specific tabular metal nanoparticle has a round shape without corners in a case where the particle is observed in the normal direction of the main plane using a transmission electron microscope (TEM), and can be appropriately selected depending on the purpose thereof.

The triangular or higher polygonal shape is not particularly limited as long as the specific tabular metal nanoparticle has a triangular or higher polygonal shape in a case where the particle is observed in the normal direction of the main plane using a transmission electron microscope (TEM), and can be appropriately selected depending on the purpose thereof.

The angle of the triangular or higher polygonal shape may be an acute angle or an obtuse angle, but an obtuse angle is preferable from the viewpoint that absorption of light in a visible light range can be reduced.

The proportion of the specific tabular metal nanoparticles having triangular to circular shapes in the specific tabular metal nanoparticles is preferably 60% by number or greater, more preferably 65% by number or greater, and still more preferably 70% by number or greater with respect to the total number of specific tabular metal nanoparticles.

In a case where the proportion of the specific tabular metal nanoparticles having triangular to circular shapes is 60% by number or greater, the absorbance of light in a visible light range is further decreased.

The term "% by number" indicates the proportion (percentage) of the number of specific tabular metal nanoparticles having triangular to circular shapes in 500 pieces of specific tabular metal nanoparticles. The "% by number" is acquired by observing 500 pieces of specific tabular metal nanoparticles in the normal direction of the main planes using a TEM.

The average equivalent circle diameter of the specific tabular metal nanoparticles is not particularly limited, but is preferably in a range of 10 nm to 500 nm, more preferably in a range of 50 nm to 400 nm, and still more preferably in a range of 90 nm to 300 nm.

In a case where the average equivalent circle diameter of the specific tabular metal nanoparticles is 10 nm or greater, since the absorbance of light in a visible light range is further decreased, the tint of the image is suppressed. Further, in a case where the absorbance of light in a visible light range is further decreased, the specular glossiness of the image is further improved.

In a case where the average equivalent circle diameter of the specific tabular metal nanoparticles is 500 nm or less, clogging of a nozzle due to an ink is further suppressed, and thus the jetting reliability of the ink is further improved. Further, in a case where the average equivalent circle diameter of the specific tabular metal nanoparticles is 500 nm or less, the dispersibility of the specific tabular metal nanoparticles in the ink is further improved, and thus the specular glossiness of the image is further improved.

In the present disclosure, the "average equivalent circle diameter of the specific tabular metal nanoparticles" indicates the number average value of the equivalent circle diameters of 500 pieces of specific tabular metal nanoparticles.

The equivalent circle diameter of each specific tabular metal nanoparticle is acquired based on a transmission electron microscope image (TEM image). Specifically, the diameter of a circle having the same area as the area (that is, the projected area) of the specific tabular metal nanoparticle in a TEM image is set as the equivalent circle diameter.

The example of the method of measuring the average equivalent circle diameter of the specific tabular metal nanoparticles is as described in the examples below.

The coefficient of variation in the particle size distribution of the specific tabular metal nanoparticles is preferably 35% or less, more preferably 30% or less, and still more preferably 20% or less.

The "coefficient of variation in the particle size distribution of the specific tabular metal nanoparticles" indicate a value (%) obtained by dividing the standard deviation of the equivalent circle diameters (particle size distribution) of 500 pieces of specific tabular metal nanoparticles by the number average value (average equivalent circle diameter) of the equivalent circle diameters of 500 pieces of specific tabular metal nanoparticles and multiplying the divided value by 100.

From the viewpoints of the dispersibility of the specific tabular metal nanoparticles in the ink and the jettability of the ink, the average thickness of the specific tabular metal nanoparticles is preferably 50 nm or less, more preferably in a range of 2 nm to 25 nm, and still more preferably in a range of 3 nm to 15 nm.

In the present disclosure, the "average thickness of the specific tabular metal nanoparticles" indicates the number average value of the thicknesses of 500 pieces of the specific tabular metal nanoparticles.

The thickness of each specific tabular metal nanoparticle is measured according to a focused ion beam - transmission electron microscopy (FIB-TEM) method.

The example of the method of measuring the average thickness of the specific tabular metal nanoparticles is as described in the examples below.

The average aspect ratio (in other words, average equivalent circle diameter/average thickness) of the specific tabular metal nanoparticles is 3 or greater as described above.

From the viewpoints of suppressing the tint of the image and further improving the specular glossiness of the image, the average aspect ratio of the specific tabular metal nanoparticles is preferably 5 or greater, more preferably 10 or greater, and still more preferably 15 or greater.

Further, the upper limit of the average aspect ratio of the specific tabular metal nanoparticles is not particularly limited, but is preferably 100 or less, more preferably 40 or less, and still more preferably 30 or less from the viewpoints of the dispersibility of the specific tabular metal nanoparticles and the specular glossiness of the image.

The metal element contained in the specific tabular metal nanoparticles is not particularly limited, and examples thereof include silver, gold, platinum, and aluminum.

From the viewpoint of the specular glossiness of the image, the specific tabular metal nanoparticles contain preferably at least one metal element selected from the group consisting of silver, gold, or platinum, more preferably at least one metal element selected from silver or gold, and still more preferably silver.

Further, from the viewpoint of suppressing the tint of the image, the specific tabular metal nanoparticles contain preferably at least one metal element selected from silver or platinum and more preferably silver.

For example, from the viewpoint of further improving the specular glossiness of the image, the content of the silver in the specific tabular metal nanoparticles is preferably 80% by mass or greater with respect to the total amount of the specific tabular metal nanoparticles.

The content of the specific tabular metal nanoparticles in the ink according to the embodiment of the present disclosure is not particularly limited.

The content of the specific tabular metal nanoparticles in the ink according to the embodiment of the present disclosure is preferably in a range of 0.1% by mass to 20% by mass, more preferably in a range of 0.5% by mass to 15% by mass, and still more preferably in a range of 1% by mass to 8% by mass with respect to the total amount of the ink.

In a case where the content of the specific tabular metal nanoparticles in the ink according to the embodiment of the present disclosure is 0.1% by mass or greater with respect to the total amount of the ink, the specular glossiness of the image is further improved.

In a case where the content of the specific tabular metal nanoparticles in the ink according to the embodiment of the present disclosure is 20% by mass or less with respect to the total amount of the ink, the jetting reliability of the ink is further improved.

### ∼ Method of synthesizing specific tabular metal nanoparticles ∼

A method of synthesizing the specific tabular metal nanoparticles is not particularly limited and can be appropriately selected depending on the purpose thereof.

Examples of the method of synthesizing the specific tabular metal nanoparticles having a triangular or higher polygonal shape include liquid phase methods such as a chemical reduction method, a photochemical reduction method, and an electrochemical reduction method.

Among these, as the method of synthesizing the specific tabular metal nanoparticles having a triangular or higher polygonal shape, from the viewpoint of controlling the shape and the size, a chemical reduction method or a photochemical reduction method is preferable.

In a case where the specific tabular metal nanoparticles having a triangular or higher polygonal shape are synthesized, the corners of each specific tabular metal nanoparticle having a triangular or higher polygonal shape may be made blunt by performing an etching treatment using a dissolution species that dissolves silver, such as nitric acid or sodium nitrite, and an aging treatment through heating after the synthesis.

As the method of synthesizing the specific tabular metal nanoparticles, a method of fixing a seed crystal onto a surface of a transparent base material such as a film or glass in advance and then allowing crystals of the metal particles (for example, Ag) to grow in a tabular shape may be used in addition to the synthesis method described above.

The specific tabular metal nanoparticles may be subjected to another treatment in order to impart desired characteristics.

Another treatment is not particularly limited and can be appropriately selected depending on the purpose thereof.

Examples of another treatment include a treatment of forming a high refractive index shell layer described in paragraphs [0068] to [0070] of JP2014-184688A and a treatment of adding various additives described in paragraphs [0072] and [0073] of JP2014-184688A.

### [Silicon compound]

The ink according to the embodiment of the present disclosure contains a silicon compound.

In the ink according to the embodiment of the present disclosure, the silicon compound contributes to improvement of jetting reliability of the ink. Further, the silicon compound also contributes to suppression of degradation of the liquid repellency of the ink jet head member (in other words, a decrease in the contact angle).

The ink according to the embodiment of the present disclosure may contain only one or two or more kinds of silicon compounds.

The silicon compound is not particularly limited.

Examples of the silicon compound include silicic acid and a silicate.

Examples of the silicic acid include silicic anhydride (silica) such as colloidal silica.

It is preferable that the silicate is soluble in water, and examples of the water-soluble silicate include an alkali metal silicate and an ammonium silicate.

Further, the term "water-soluble" in the water-soluble silicate indicates a property in which 0.1 g or greater (preferably 1 g or greater) of the silicate is dissolved in 1000 g of water at 25°C.

For example, it is preferable that the silicon compound contains at least one selected from the group consisting of colloidal silica and a water-soluble alkali metal silicate from the viewpoint of the dispersibility of the ink and more preferable that the silicon compound contains colloidal silica from the viewpoint of improving the jetting reliability of the ink. It is particularly preferable that the silicon compound is colloidal silica.

The colloidal silica is a colloid formed of fine particles of an inorganic oxide containing silicon with an average particle diameter of several hundreds of nanometers or less.

The colloidal silica may contain silicon dioxide (containing a hydrate of silicon dioxide) as a main component and an aluminate as a minor component. The main component indicates a component with the highest content ratio (% by mass). Examples of the aluminate which is contained in the colloidal silica as a minor component in some cases include sodium aluminate and potassium aluminate.

Further, the colloidal silica may contain inorganic salts such as sodium hydroxide, potassium hydroxide, lithium hydroxide, and ammonium hydroxide and organic salts such as tetramethylammonium hydroxide. These inorganic salts and organic salts act as, for example, a stabilizer of a colloid.

The dispersion medium of the colloidal silica is not particularly limited and may be any of water, an organic solvent, or a mixed solution of these.

The organic solvent may be a water-soluble organic solvent or a water-insoluble organic solvent, but a water-soluble organic solvent is preferable.

Further, the term "water-soluble" in the water-soluble organic solvent indicates a property in which 0.1 g or greater (preferably 1 g or greater) of the organic solvent is dissolved in 1000 g of water at 25°C.

Examples of the water-soluble organic solvent include methanol, ethanol, isopropanol, and n-propanol.

A method of producing colloidal silica is not particularly limited, and the colloidal silica can be produced according to a method which has typically been used.

The colloidal silica can be produced according to a method of using low-priced water glass as a raw material or a liquid phase synthesis method (for example, see "Fibers and Industries", Vol. 60, No. 7 (2004), p. 376) such as hydrolysis of an alkoxide in addition to a gas phase synthesis method such as aerosil synthesis using thermal decomposition of silicon tetrachloride.

The average particle diameter of silica particles contained in the colloidal silica is not particularly limited.

The average particle diameter (volume average particle diameter) of silica particles can be set to be in a range of 1 nm to 200 nm, preferably in a range of 1 nm to 100 nm, more preferably in a range of 3 nm to 50 nm, still more preferably in a range of 3 nm to 25 nm, and particularly preferably in a range of 5 nm to 20 nm.

In a case where the average particle diameter (volume average particle diameter) of silica particles is 200 nm or less, degradation of liquid repellency of the ink jet head member can be more effectively suppressed.

In a case where the average particle diameter (volume average particle diameter) of silica particles is 1 nm or greater, colloidal silica with less variation in performance can be obtained.

The average particle diameter (volume average particle diameter) of silica particles contained in the colloidal silica can be acquired using a technique such as a laser diffraction method or a light scattering method which is a typical measurement method for dispersed particles.

The shape of the silica particles contained in the colloidal silica is not particularly limited as long as the jetting performance of the ink is not impaired.

The shape of the silica particles may be any of a spherical shape, a needle shape, or a rosary shape.

Among these, from the viewpoint of the jettability of the ink, it is preferable that the shape of the silica particles is a spherical shape.

The colloidal silica may be produced according to a production method of the related art or a commercially available product may be used.

Examples of the commercially available product of the colloidal silica include Ludox (registered trademark) AM, Ludox (registered trademark) AS, Ludox (registered trademark) LS, Ludox (registered trademark) TM, and Ludox (registered trademark) HS (all manufactured by E. I. Du Pont de Nemouvs & Co. Ltd.); SNOWTEX (registered trademark) S, SNOWTEX (registered trademark) XS, SNOWTEX (registered trademark) 20, SNOWTEX (registered trademark) 30, SNOWTEX (registered trademark) 40, SNOWTEX (registered trademark) N, SNOWTEX (registered trademark) C, SNOWTEX (registered trademark) O, SNOWTEX (registered trademark) ST-UP, SNOWTEX (registered trademark) PS-S, SNOWTEX (registered trademark) PS-M, SNOWTEX (registered trademark) ST-OUP, SNOWTEX (registered trademark) PS-SO, and SNOWTEX (registered trademark) PS-MO (all manufactured by Nissan Chemical Corporation); Syton (registered trademark) C-30 and Syton (registered trademark) ZOO (both manufactured by Monsanto Co. Ltd.); Nalcoag-1060 and Nalcoag-ID21 to ID64 (all manufactured by Nalco Chem Co. Ltd.); methanol sol, isopropyl alcohol (IPA) sol, methyl ethyl ketone (MEK) sol, and toluene sol (all manufactured by Fuso Chemical Co. Ltd.); Cataloid (registered trademark)-S, Cataloid (registered trademark)-F120, Cataloid (registered trademark) SI-350, Cataloid (registered trademark) SI-500, Cataloid (registered trademark) SI-30, Cataloid (registered trademark) S-20L, Cataloid (registered trademark) S-20H, Cataloid (registered trademark) S-30L, Cataloid (registered trademark) S-30H, Cataloid (registered trademark) SI-40, and OSCAL (registered trademark)-1432 (isopropyl alcohol sol) (all manufactured by JGC C & C); and ADELITE (registered trademark) Series (manufactured by Adeka Corporation).

The pH of the commercially available colloidal silica dispersion liquid is adjusted to be acidic or alkaline in many cases. The reason why the pH thereof is adjusted is that a stable dispersion region of colloidal silica is present on an acidic side or an alkaline side. In a case where the commercially available colloidal silica dispersion liquid is added to the ink, the addition is performed in consideration of the pH of the stable dispersion region of the colloidal silica and the pH of the ink.

The water-soluble alkali metal silicate is formed of silicic acid and an alkali metal and is not particularly limited as long as a compound which is soluble in water is used.

The water-soluble alkali metal silicate may be any of an alkali metal salt of metasilicic acid or an alkali metal salt of orthosilicic acid or may be a mixture of these.

Specifically, it is preferable that the alkali metal silicate is at least one compound represented by Formula (S).

x(M₂O)·y(SiO₂) (S)

In Formula (S), M represents sodium or potassium, x represents 1 or 2, and y represents an integer of 1 to 4.

An alkali metal salt of silicic acid represented by Formula (S) is referred to as an alkali metal metasilicate in a case where x represents 1 and y represents 1 and is referred to as an alkali metal orthosilicate in a case where x represents 2 and y represent 1, and both of the alkali metal metasilicate and the alkali metal orthosilicate are water-soluble alkali metal silicates.

In most cases, the alkali metal silicate is typically a mixture formed of two or more compounds represented by Formula (S), but the alkali metal silicate in the present disclosure may be formed of one compound represented by Formula (S) or a mixture formed of two or more compounds represented by Formula (S).

As the water-soluble alkali metal silicate, a commercially available compound (such as water glass) or a compound obtained by melting silicic acid, a carbonate of an alkali metal, or a hydroxide may be used. However, for example, from the viewpoint of the dispersibility of the ink, it is preferable to use sodium silicate or potassium silicate which is a commercially available compound.

The content of the silicon compound in the ink according to the embodiment of the present disclosure is not particularly limited.

The content of the silicon compound (preferably colloidal silica, the same applies hereinafter) in the ink according to the embodiment of the present disclosure is preferably in a range of 0.01% by mass to 4% by mass with respect to the total amount of the ink from the viewpoint of improving the jetting reliability of the ink and more preferably in a range of 0.01% by mass to 3% by mass, still more preferably in a range of 0.02% by mass to 2% by mass, and particularly preferably in a range of 0.02% by mass to 1% by mass with respect to the total amount of the ink from the viewpoints of improving the jetting reliability of the ink and recording an image with excellent specular glossiness.

Further, in a case where the content of the silicon compound in the ink according to the embodiment of the present disclosure is in a range of 0.01% by mass to 4% by mass (preferably in a range of 0.1% by mass to 4% by mass) with respect to the total amount of the ink, degradation of liquid repellency of the member constituting the ink jet head can be effectively suppressed.

The ratio of the content of the specific tabular metal nanoparticles to the content of the silicon compound (hereinafter, also referred to as "the content of the specific tabular metal nanoparticles/the content of the silicon compound") in the ink according to the embodiment of the present disclosure is preferably in a range of 0.1 to 10000, preferably in a range of 1 to 1000, and still more preferably in a range of 2 to 500 in terms of mass.

In a case where the content of the specific tabular metal nanoparticles/the content of the silicon compound is in the above-described range, the jetting reliability of the ink is further improved, and an image having excellent specular glossiness can be recorded.

### [Water]

The ink according to the embodiment of the present disclosure contains water.

In the ink according to the embodiment of the present disclosure, water contributes to the jetting reliability of the ink.

Since the ink according to the embodiment of the present disclosure contains water, in a case where the ink jet head is worn by the specific tabular metal nanoparticles, the silicon compound can contribute to restoring the worn portion.

Further, a liquid-repellent film for protecting a head is frequently provided on a nozzle jetting surface of the ink jet head. The liquid-repellent film is formed of, for example, a compound containing silicon such as a fluorinated alkylsilane compound, and silicon in the liquid-repellent film may be eluted in an aqueous ink containing water due to the pH of the ink. According to the ink according to the embodiment of the present disclosure, it is assumed that the portion eluted by the silicon compound in the ink is restored even in a case where the silicon in the liquid-repellent film is eluted.

The content of water in the ink according to the embodiment of the present disclosure is not particularly limited.

From the viewpoints of the handleability of the ink and reduction of the environmental load, the content of water in the ink according to the embodiment of the present disclosure is preferably 10% by mass or greater, more preferably 20% by mass or greater, and still more preferably 30% by mass or greater with respect to the total amount of the ink.

Further, the content of water in the ink according to the embodiment of the present disclosure is preferably 90% by mass or less, more preferably 80% by mass or less, and still more preferably 70% by mass or less with respect to the total amount of the ink.

### [Dispersant]

It is preferable that the ink according to the embodiment of the present disclosure contains at least one dispersant from the viewpoint of the dispersibility of the specific tabular metal nanoparticles.

The dispersant is not particularly limited, but a water-soluble dispersant is preferable.

Further, the term "water-soluble" in the water-soluble dispersant indicates a property in which 5 g or greater (preferably 10 g or greater) of the dispersant is dissolved in 100 g of water at 25°C.

Examples of the dispersant include a resin such as a polyvinyl acetal resin, a polyvinyl alcohol resin, a polyvinyl butyral resin, a polyacrylate resin, a polymethyl methacrylate resin, a polycarbonate resin, a polyvinyl chloride resin, a (saturated) polyester resin, or a polyurethane resin, polysaccharides such as cellulose, gelatin, polyethylene glycol, and polyvinylpyrrolidone.

Among these, gelatin is particularly preferable as a dispersant.

In a case where the ink according to the embodiment of the present disclosure contains gelatin, the dispersibility of the specific tabular metal nanoparticles can be remarkably improved. In a case where the dispersibility of the specific tabular metal nanoparticles is improved, improvement of specular glossiness of an image to be recorded can be expected. Further, improvement of the dispersibility of the specific tabular metal nanoparticles leads to improvement of the jettability of the ink.

Particularly in a case where the specific tabular metal nanoparticles contain silver and gelatin is selected as a dispersant, since the specific tabular metal nanoparticles can be satisfactorily dispersed in the ink at a high concentration, the specular glossiness of the image can be further improved.

Examples of the gelatin include alkali-treated gelatin accompanied by a treatment using an alkali such as lime in the process of induction from collagen; acid-treated gelatin accompanied by a treatment using an acid such as hydrochloric acid; enzyme-treated gelatin accompanied by a treatment using an enzyme such as an hydrolytic enzyme; oxygen-treated gelatin; modified gelatin (such as phthalated gelatin, succinated gelatin, or trimellitic gelatin) modified by a reagent containing one group which is capable of reacting an amino group, an imino group, a hydroxy group, or a carboxy group serving as a functional group contained in a gelatin molecule with these functional groups; and gelatin which has been typically used in the related art described from the 6-th line of the column lower left in page 222 to the last line of the column upper left in page 225 of JP1987-215272A (JP-S62-215272A).

From the viewpoint of the dispersibility of the specific tabular metal nanoparticles, the weight-average molecular weight of the gelatin is preferably in a range of 5000 to 1000000, more preferably in a range of 10000 to 500000, and still more preferably in a range of 20000 to 200000.

In the present specification, the weight-average molecular weight indicates a value measured by gel permeation chromatography (GPC).

According to GPC, the measurement is performed using HLC-8020GPC (manufactured by Tosoh Corporation) as a measuring device, three columns of TSKgel (registered trademark), Super Multipore HZ-H (manufactured by Tosoh Corporation, 4.6 mmID × 15 cm), and tetrahydrofuran (THF) as an eluent.

Further, according to GPC, the measurement is performed by setting the sample concentration to 0.45% by mass, the flow rate to 0.35 mL/min, the sample injection amount of 10 µL, and the measurement temperature of 40°C using a differential refractive index (RI) detector.

The calibration curve is prepared from eight "standard samples TSK standard, polystyrene" (manufactured by Tosoh Corporation): "F-40", "F-20", "F-4", "F-1", "A-5000", "A-2500", "A-1000", and "n-propylbenzene".

In a case where the ink according to the embodiment of the present disclosure contains a dispersant, the content of the dispersant in the ink is not particularly limited.

The content of the dispersant (preferably gelatin, the same applies hereinafter) in the ink according to the embodiment of the present disclosure is preferably 0.005% by mass or greater, more preferably 0.01% by mass or greater, and still more preferably 0.02% by mass or greater with respect to the total amount of the ink.

In a case where the content of the dispersant in the ink according to the embodiment of the present disclosure is 0.005% by mass or greater with respect to the total amount of the ink, the dispersability of the specific tabular metal nanoparticles can be further improved.

Further, the content of the dispersant in the ink according to the embodiment of the present disclosure is preferably 15% by mass or less, more preferably 10% by mass or less, and still more preferably 5% by mass or less with respect to the total amount of the ink.

In a case where the content of the dispersant (particularly, gelatin) in the ink is extremely high, the specular glossiness of the image to be recorded is impaired in some cases. In a case where the content of the dispersant in the ink is 15% by mass or less with respect to the total amount of the ink, the specular glossiness of the image to be recorded is unlikely to be impaired.

In a case where the ink according to the embodiment of the present disclosure contains a dispersant, the ratio of the content of the specific tabular metal nanoparticles to the content of the dispersant (hereinafter, also referred to as "the content of the specific tabular metal nanoparticles/the content of the dispersant") is preferably in a range of 0.1 to 10000, preferably in a range of 0.5 to 500, and still more preferably in a range of 1 to 100 in terms of mass.

In a case where the content of the specific tabular metal nanoparticles/the content of the dispersant is in the above-described range, the dispersibility of the specific tabular metal nanoparticles is further improved, and an image with excellent specular glossiness can be recorded. Further, in a case where the content of the specific tabular metal nanoparticles/the content of the dispersant is in the above-described range, the tint of an image is satisfactorily suppressed.

### [Organic solvent]

From the viewpoint of improving the jettability of the ink, it is preferable that the ink according to the embodiment of the present disclosure contains at least one organic solvent.

The organic solvent is not particularly limited, but a water-soluble organic solvent is preferable.

The concept of "water-soluble" in the water-soluble organic solvent is the same as described above.

The water-soluble organic solvent is not particularly limited, and examples thereof include alkanediols (polyhydric alcohols) such as glycerin, 1,2,6-hexanetriol, trimethylolpropane, ethylene glycol, propylene glycol, diethylene glycol, triethylene glycol, tetraethylene glycol, pentaethylene glycol, dipropylene glycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; alkyl alcohols having 1 to 4 carbon atoms such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxy butanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, tripropylene glycol monomethyl ether, dipropylene glycol mono-n-propyl ether, and dipropylene glycol mono-iso-propyl ether; and pyrrolidones such as 2-pyrrolidone and N-methyl-2-pyrrolidone.

The water-soluble organic solvent can be appropriately selected from, for example, the water-soluble organic solvents described in paragraphs [0176] to [0179] of JP2011-046872A and the water-soluble organic solvents described in paragraphs [0063] to [0074] of JP2013-018846A in addition to those described above.

Further, among the water-soluble organic solvents, polyhydric alcohols are useful as an anti-drying agent or a wetting agent. Examples of the polyhydric alcohols serving as an anti-drying agent or a wetting agent include polyhydric alcohols described in paragraph [0117] of JP2011-042150A.

As the water-soluble organic solvent, an organic solvent (hereinafter, also referred to as a "specific organic solvent") having a boiling point of 150°C or higher and a solubility parameter (hereinafter, also referred to as an "SP" value) of 24 MPa^{1/2} or greater is preferable.

In a case where the boiling point of the water-soluble organic solvent contained in the ink is 150°C or higher (in other words, the boiling point of the water-soluble organic solvent is higher than the boiling point of water), degradation of the jettability of the ink due to volatilization of the solvent is further suppressed.

From the viewpoint of the jettability of the ink, the boiling point of the water-soluble organic solvent is more preferably 170°C or higher and still more preferably 180°C or higher.

The upper limit of the boiling point of the water-soluble organic solvent is not particularly limited. For example, from the viewpoint of the viscosity of the ink, the boiling point thereof is preferably 300°C or less.

The boiling point is measured using a boiling point measuring device (DosaTherm300, manufactured by Titan Technologies, Inc.).

In the present disclosure, the boiling point indicates a boiling point measured under the atmospheric pressure.

Further, in a case where the SP value of the water-soluble organic solvent is 24 MPa^{1/2} or greater, the aligning properties of the specific tabular metal nanoparticles in the ink (that is, the image) applied onto the base material are improved so that the specular glossiness of the image is further improved.

From the viewpoint of the specular glossiness of the image, the SP value of the water-soluble organic solvent is more preferably 25 MPa^{1/2} or greater, still more preferably 26 MPa^{1/2} or greater, and particularly preferably 27 MPa^{1/2} or greater.

The upper limit of the SP value of the water-soluble organic solvent is not particularly limited. For example, from the viewpoint of the viscosity of the ink, the upper limit thereof is preferably 40 MPa^{1/2} or less.

In the present disclosure, the solubility parameter (SP value) is as value [unit: MPa^{1/2}] acquired using an Okitsu method. The Okitsu method is a known method of calculating the SP value in the related art and is described in Journal of the Adhesion Society of Japan, Vol. 29, No. 6 (1993), p. 249 to 259.

Hereinafter, specific examples of the specific organic solvent will be described. Further, the numerical values in parentheses indicate boiling points (unit: °C) and SP values (unit: MPa^{1/2}) in order of the description.

Specific examples thereof include ethylene glycol (197°C, 29.9 MPa^{1/2}), diethylene glycol (244°C, 24.8 MPa^{1/2}), propylene glycol (188°C, 27.6 MPa^{1/2}), 1,4-butanediol (230°C, 30.7 MPa^{1/2}), 1,2-pentanediol (206°C, 28.6 MPa^{1/2}), 1,5-pentanediol (206°C, 29.0 MPa^{1/2} ), 1,6-hexanediol (250°C, 27.7 MPa^{1/2}), glycerin (290°C, 33.8 MPa^{1/2}), formamide (210°C, 39.3 MPa^{1/2}), dimethylformamide (153°C, 30.6 MPa^{1/2}), triethanolamine (208°C (20 hPa), 32.3 MPa^{1/2}), polyethylene glycol (250°C, 26.1 MPa^{1/2}), 1,2-hexanediol (223°C, 24.1 MPa^{1/2}), dipropylene glycol (230°C, 27.1 MPa^{1/2}), 1,2-butanediol (191°C (747 mmHg, value in the document), 26.1 MPa^{1/2}).

Among these, from the viewpoint of the jettability of the ink, at least one selected from the group consisting of propylene glycol, glycerin, and ethylene glycol is preferable as the specific organic solvent.

In a case where the ink according to the embodiment of the present disclosure contains an organic solvent, the content of the organic solvent in the ink is not particularly limited.

The content of the organic solvent (preferably the specific organic solvent) in the ink according to the embodiment of the present disclosure is preferably in a range of 5% by mass to 80% by mass, more preferably in a range of 10% by mass to 75% by mass, and still more preferably in a range of 15% by mass to 70% by mass with respect to the total amount of the ink.

### [Surfactant]

The ink according to the embodiment of the present disclosure may contain at least one surfactant.

In a case where the ink according to the embodiment of the present disclosure contains a surfactant, a fluorine-based surfactant is preferable as the surfactant. In a case where the ink according to the embodiment of the present disclosure contains a fluorine-based surfactant, the specular glossiness of the image is further improved.

According to the fluorine-based surfactant, the specular glossiness of the image is considered to be further improved because of a decrease in the surface tension of the ink and improvement of the aligning properties of the specific tabular metal nanoparticles in the ink applied to the base material.

The fluorine-based surfactant is not particularly limited and can be selected from known fluorine-based surfactants.

Examples of the fluorine-based surfactant include fluorine-based surfactants described in "Surfactant Handbook" (edited by Ichiro Nishi, Ichiro Imai, and Masatachi Kasai, Sangyo Tosho Publishing Co., Ltd., 1960).

As the fluorine-based surfactant, a fluorine-based surfactant containing a perfluoro group in a molecule and having a refractive index of 1.30 to 1.42 (preferably in a range of 1.32 to 1.40) is preferable.

According to the fluorine-based surfactant having a refractive index of 1.30 to 1.42, the specular glossiness of the image can be further improved.

The refractive index can be measured using a Kalnew precision refractometer (KPR-3000, manufactured by Shimadzu Corporation). In a case where the fluorine-based surfactant is a liquid, the refractive index is measured by storing the fluorine-based surfactant in a cell. In a case where the fluorine-based surfactant is a solid, the refractive index is measured using a V block method of placing the solid sample in a V block prism attached to a Kalnew precision refractometer (KPR-3000, manufactured by Shimadzu Corporation).

In a case where the fluorine-based surfactant contains a perfluoro group in a molecule, the refractive index of the fluorine-based surfactant is easily adjusted to be in the above-described range, and the surface tension of the ink can be adjusted with a relatively small amount of the fluorine-based surfactant.

Examples of the fluorine-based surfactant containing a perfluoro group in a molecule and having a refractive index of 1.30 to 1.42 include an anionic surfactant such as perfluoroalkyl carbonate, perfluoroalkyl sulfonate, or perfluoroalkyl phosphoric acid ester; an amphoteric surfactant such as perfluoroalkyl betaine; a cationic surfactant such as perfluoroalkyltrimethylammonium salt; and a nonionic surfactant such as perfluoroalkylamine oxide, a perfluoroalkylethylene oxide adduct, an oligomer containing a perfluoroalkyl group and a hydrophilic group, an oligomer containing a perfluoroalkyl group and a lipophilic group, an oligomer containing a perfluoroalkyl group, a hydrophilic group, and a lipophilic group, or urethane containing a perfluoroalkyl group and a lipophilic group. Further, suitable examples thereof include fluorine-based surfactants described in JP1987-170950A (JP-S62-170950A), JP1987-226143A (JP-S62-226143A), and JP1985-168144A (JP-S60-168144A).

As the fluorine-based surfactant, a commercially available product may be used.

Examples of the commercially available product of the fluorine-based surfactant include SURFLON (registered trademark) Series (S-243, S-242, and the like, manufactured by AGC SEIMI CHEMICAL CO., LTD.), MEGAFACE (registered trademark) Series (F-444, F-410, and the like, manufactured by DIC Corporation), NOVEC (registered trademark) Series (for example, 27002, manufactured by 3M Japan Ltd.), and ZONYL Series (for example, FSE, manufactured by E. I. du Pont de Nemours and Company).

In a case where the ink according to the embodiment of the present disclosure contains a surfactant, the content of the surfactant in the ink is not particularly limited.

The content of the surfactant in the ink according to the embodiment of the present disclosure is preferably in a range of 0.01% by mass to 5.0% by mass, more preferably in a range of 0.01% by mass to 4.0% by mass, still more preferably in a range of 0.01%) by mass to 3.0% by mass, even still more preferably in a range of 0.05% by mass to 1.0% by mass, and even still more preferably in a range of 0.1% by mass to 0.5% by mass with respect to the total amount of the ink.

Further, in a case where the base material on which an image is recorded is coated paper (including art paper), the content of the surfactant which can be contained in the ink is preferably in a range of 0.1% by mass to 4.0% by mass and more preferably in a range of 0.2% by mass to 3.0% by mass.

In a case where the content of the surfactant in the ink according to the embodiment of the present disclosure is in the above-described range, the surface tension of the ink is likely to be adjusted such that the jettability of the ink is further improved.

### [Other components]

The ink composition according to the embodiment of the present disclosure may contain components other than the above-described component as necessary.

Examples of other components include a preservative and an antifoaming agent.

The preservative can refer to the description in paragraphs [0073] to [0090] of JP2014-184688A.

The antifoaming agent can refer to the description in paragraphs [0091] and [0092] of JP2014-184688A.

Further, examples of other components include a surfactant other than the fluorine-based surfactant, a solid wetting agent (urea or the like), an antifading agent, an emulsification stabilizer, a penetration enhancer, an ultraviolet absorbing agent, a fungicide, a pH adjuster, a viscosity adjuster, a rust inhibitor, and a chelating agent.

Further, as other components, polymer particles are also exemplified.

Examples of the polymer particles include self-dispersing polymer particles described in paragraphs [0090] to [0121] of JP2010-064480A, paragraphs [0130] to [0167] of JP2011-068085A, and paragraphs [0180] to [0234] of JP2011-062998A.

The ink according to the embodiment of the present disclosure may contain a colorant (a pigment, a dye, or the like).

From the viewpoints of light fastness of an image and the weather fastness of an image, a pigment is preferable as the colorant.

The pigment is not particularly limited and can be appropriately selected depending on the purpose thereof.

Examples of the pigment include known organic pigments and inorganic pigments.

Examples of the organic pigments and inorganic pigments include a yellow pigment, a red pigment, a magenta pigment, a blue pigment, a cyan pigment, a green pigment, an orange pigment, a purple pigment, a brown pigment, a black pigment, and a white pigment. Further, examples of the pigment include surface-treated pigments (for example, a pigment whose surface is treated with a dispersant such as a resin or a pigment derivative and a self-dispersing pigment having particles, each of which contains a hydrophilic group). In addition, as the pigment, a commercially available pigment dispersion may be used.

In a case where a pigment is used as the colorant, a pigment dispersant may be used as necessary.

The coloring material such as a pigment and the pigment dispersant can appropriately refer to the description in paragraphs [0180] to [0200] of JP2014-040529A.

Here, in a case where a metallic tone image in which a tint is suppressed is recorded, the content of the colorant in the ink according to the embodiment of the present disclosure is preferably 1% by mass or less, more preferably less than 1% by mass, still more preferably 0.1% by mass or less, and most preferably 0% by mass (that is, the ink according to the embodiment of the present disclosure does not contain a colorant) with respect to the total amount of the ink.

Further, the ink according to the embodiment of the present disclosure may be a photocurable ink containing at least one polymerizable compound. In this case, it is preferable that the ink further contains a polymerization initiator.

Examples of the polymerizable compound include the polymerizable compounds (such as a bi- or higher functional (meth)acrylamide compound) described in paragraphs [0128] to [0144] of JP2011-184628A, paragraphs [0019] to [0034] of JP2011-178896A, and paragraphs [0065] to [0086] of JP2015-025076A.

Examples of the polymerization initiator include known polymerization initiators described in paragraphs [0186] to [0190] of JP2011-184628A, paragraphs [0126] to [0130] of JP2011-178896A, and paragraphs [0041] to [0064] of JP2015-025076A.

### <Preferable physical properties of ink>

The physical properties of the ink according to the embodiment of the present disclosure are not particularly limited, but the following physical properties are preferable.

The pH of the ink according to the embodiment of the present disclosure at 25°C (± 1°C) is preferably 7.5 or greater.

The pH of the ink according to the embodiment of the present disclosure at 25°C (± 1°C) is more preferably in a range of 7.5 to 13 and still more preferably in a range of 7.5 to 10.

The viscosity of the ink according to the embodiment of the present disclosure is preferably in a range of 0.5 mPa·s to 10 mPa·s and more preferably in a range of 1 mPa·s to 7 mPa·s.

The viscosity is measured using a VISCOMETER TV-22 (manufactured by TOKI SANGYO CO., LTD.) under a temperature condition of 30°C.

The surface tension of the ink according to the embodiment of the present disclosure at 25°C (± 1°C) is preferably 60 mN/m or less, more preferably in a range of 20 mN/m to 50 mN/m, and still more preferably in a range of 25 mN/m to 45 mN/m.

From the viewpoint of suppressing occurrence of curling in the base material, it is advantageous that the surface tension of the ink is 60 mN/m or less.

The surface tension is measured using an Automatic Surface Tensiometer CBVP-Z (manufactured by Kyowa Interface Science, Inc.) according to a plate method.

### <Applications of ink>

According to the ink according to the embodiment of the present disclosure, an image having specular glossiness can be recorded.

From the viewpoint of effectively obtaining the effect of specular glossiness, it is preferable that the ink according to the embodiment of the present disclosure is used for recording an image having a minimum width of 1 mm or greater.

The minimum width of the image to be recorded with the ink according to the embodiment of the present disclosure is more preferably 2 mm or greater and still more preferably 3 mm or greater.

The upper limit of the minimum width of the image to be recorded with the ink according to the embodiment of the present disclosure is not particularly limited. For example, the upper limit thereof is 300 mm or less and preferably 200 mm or less.

The ink according to the embodiment of the present disclosure has been used for general recording of an image according to an ink jet method without particular limitation, but it is preferable that the ink is used for recording a decorative image according to an ink jet method.

The "recording of a decorative image" indicates general recording of an image for the purpose of adding decoration to an object. The recording of a decorative image is different from the recording carried out for the purpose other than the above-described purpose (for example, recording for forming a conductive line).

In a case where the ink according to the embodiment of the present disclosure is used for recording a decorative image, decoration with specular glossiness can be added to an object.

### <Method of producing ink>

A method of producing the ink according to the embodiment of the present disclosure is not particularly limited, and a method of mixing respective components described above can be appropriately employed.

A preferable aspect of the method of producing the ink according to the embodiment of the present disclosure is an aspect of a method including a step of preparing a dispersion liquid containing the specific tabular metal nanoparticles (in other words, a preparation step) and a step of mixing at least the dispersion liquid with the organic solvent (in other words, a mixing step).

In the preferable aspect of the method of producing the ink according to the embodiment of the present disclosure, preferable aspects of the specific tabular metal nanoparticles and the organic solvent are as described above.

A preferable aspect for spectral characteristics of the dispersion liquid containing the specific tabular metal nanoparticles is the same as the preferable aspect of the spectral characteristics of the ink according to the embodiment of the present disclosure.

In the mixing step, the dispersion liquid containing the specific tabular metal nanoparticles, the organic solvent, and the surfactant may be mixed.

Further, in the mixing step, the dispersion liquid containing the specific tabular metal nanoparticles, the organic solvent (and the surfactant as necessary), and other components may be mixed.

The surfactant and other components which may be mixed in the mixing step are respectively the same as the surfactants and other components which can be contained in the ink described above.

### [Recorded material]

The ink according to the embodiment of the present disclosure can be suitably used for preparation of a recorded material according to the present embodiment described below.

The recorded material according to the present embodiment comprises a base material, and an image which is disposed on the base material and contains tabular metal nanoparticles (in other words, the specific tabular metal nanoparticles) having an average aspect ratio of 3 or greater which is the ratio of the average equivalent circle diameter to the average thickness, and a silicon compound.

The base material in the recorded material according to the present embodiment has the same definition as that for the base material in the image recording method according to the present embodiment, and the preferable aspects are the same as described above.

The preferable aspects of the specific tabular metal nanoparticles in the recorded material according to the present embodiment are the same as the preferable aspects of the specific tabular metal nanoparticles in the ink according to the embodiment of the present disclosure.

The preferable aspects (for example, the minimum width of the image) of the image in the recorded material according to the present embodiment are the same as the preferable aspects of the image described in the section of the "applications of ink".

The image in the recorded material according to the present embodiment may contain the components (preferably the components other than water and the organic solvent) exemplified as the components of the ink according to the embodiment of the present disclosure.

The recorded material according to the present embodiment may comprise an image containing a colorant (in other words, a colored image) on at least one of the image containing the specific tabular metal nanoparticles or a space between the base material and the image containing the specific tabular metal nanoparticles.

In a case where the recorded material comprises the colored image on the image containing the specific tabular metal nanoparticles, a colored image having specular glossiness is recorded in a portion where the image containing the specific tabular metal nanoparticles and the colored image overlap with each other.

In a case where the recorded material comprises the colored image between the base material and the image containing the specific tabular metal nanoparticles, the colored image is hidden by the image containing the specific tabular metal nanoparticles (for example, a silver image) in a portion where the image containing the specific tabular metal nanoparticles and the colored image overlap with each other.

The recorded material comprising the colored image and the image containing the specific tabular metal nanoparticles can be formed using the ink according to the embodiment of the present disclosure and a known ink containing a colorant.

### [Image recording method]

An image recording method using the ink according to the embodiment of the present disclosure is not particularly limited, but an image recording method according to the present embodiment described below is preferable.

The image recording method according to the present embodiment includes a step (hereinafter, also referred to as an "ink applying step") of applying the above-described ink according to the embodiment of the present disclosure to the base material according to an ink jet method using an ink jet head containing silicon (hereinafter, also referred to as an "ink jet head").

In the image recording method according to the present embodiment, an ink jet head containing silicon is used.

According to the image recording method using an ink jet head containing silicon, the effect of excellent jetting reliability of the ink according to the embodiment of the present disclosure can be remarkably exhibited.

Since the specific tabular metal nanoparticles contained in the ink according to the embodiment of the present disclosure have a sharp shape, an ink jet head member is scraped and worn in some cases at the time of the specific tabular metal nanoparticles coming into contact with the ink jet head member. In a case where the ink jet head member is scraped and worn, ink jetting failure tends to occur, and this results in degradation of jetting reliability of the ink.

In a case where the ink according to the embodiment of the present disclosure contains tabular metal nanoparticles (in other words, the specific tabular metal nanoparticles) having an average aspect ratio of 3 or greater, a silicon compound, and water, the worn portion (a portion formed in a state of containing silicon) of the ink jet member which has been generated by the specific tabular metal nanoparticles is restored by the silicon compound in the ink. As the result, it is considered that occurrence of jetting failure is suppressed, and stabilized jettability is maintained.

Further, in a case where the ink jet head member is formed in a state of containing silicon, the portion formed in a state of containing silicon is eluted and eroded due to contact with the ink. In a case where the ink jet head member is eroded, the size and the jetting frequency of ink droplets at the time of jetting are changed and jetting failure may occur due to this change. Such a phenomenon tends to occur particularly in a case where the ink according to the embodiment of the present disclosure is alkaline.

The erosion of the portion of the ink jet head member which is formed in a state of containing silicon is considered to be suppressed in a case where the ink according to the embodiment of the present disclosure contains a silicon compound and water.

Further, in the ink jet head, a liquid-repellent film is provided on the nozzle jetting surface in order to protect the head. During the formation of the liquid-repellent film, for example, a compound containing silicon such as a fluorinated alkylsilane compound is frequently used.

In a case where the liquid-repellent film is peeled off by the specific tabular metal nanoparticles, the liquid repellency is degraded. In a case where the liquid repellency of the liquid-repellent film is degraded, jet bending (jet directionality failure) occurs at the time of jetting the ink, the jetting reliability of the ink is damaged. It is assumed that since the liquid-repellent film worn by the specific tabular metal nanoparticles is restored in a case where the ink according to the embodiment of the present disclosure contains a silicon compound, degradation of the liquid repellency is suppressed and the jetting reliability of the ink is improved.

The ink jet head may comprise a nozzle plate in which a plurality of jetting holes are two-dimensionally arranged. The number of the plurality of jetting holes is not particularly limited and can be appropriately selected in consideration of speeding up of image recording.

As the nozzle plate, a nozzle plate containing silicon (silicon nozzle plate) can be used. For example, a silicon nozzle plate having a structure in which silicon is exposed to at least the inner wall of a nozzle port and a plate surface in an ink jetting direction is preferable. Further, for example, as the nozzle plate, a nozzle plate in which a silicon oxide film is provided on a silicon substrate can be used. The silicon oxide film is disposed between the silicon substrate and the liquid-repellent film.

The silicon oxide may be a SiO₂ film formed by oxidizing all or a part of a surface of a silicon substrate.

The system of the ink jet method is not particularly limited and can be appropriately selected from known systems.

Examples of the system of the ink jet method include an electric charge control system of jetting an ink using electrostatic attraction; a drop-on-demand system (pressure pulse system) of using the vibration pressure of a piezoelectric element; an acoustic ink jet system of converting an electric signal to an acoustic beam, irradiating an ink with the acoustic beam, and jetting the ink using a radiation pressure; and a thermal ink jet (Bubble Jet (registered trademark)) system of forming bubbles by heating an ink to use the generated pressure.

The ink jet head system may be an on-demand system or a continuous system.

The system of jetting the ink from the ink jet head is not particularly limited.

Examples of the ink jetting system include an electro-mechanical conversion system (a single cavity type, a double cavity type, a vendor type, a piston type, a share mode type, a shared wall type, or the like); an electricity-heat conversion system (a thermal ink jet type, a Bubble Jet (registered trademark) type, or the like); an electrostatic attraction system (an electric field control type, a silt jet type, or the like); and a discharge system (a spark jet type).

Examples of the recording system in the ink jet method include a shuttle system of performing recording while scanning the head in a width direction of the base material using a single serial head; and a line system (single pass system) of using a line head in which recording elements are arranged over the entire area on one side of the base material.

From the viewpoint that an image with high resolution can be recorded, the nozzle diameter of the jet head is not particularly limited, but is preferably less than 25 µm, more preferably 5 µm or greater and less than 25 µm, still more preferably 10 µm or greater and less than 25 µm, and particularly preferably 15 µm or greater and less than 25 µm.

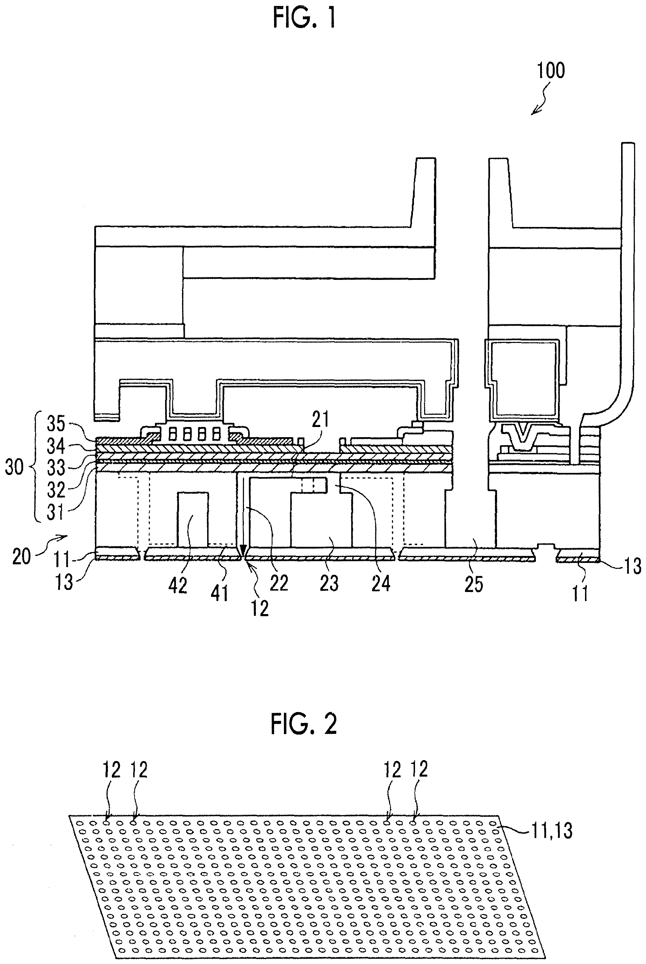

Hereinafter, the ink jet head comprising a nozzle plate which is suitably used for the image recording method according to the embodiment of the present disclosure will be described with reference to the accompanying drawings. Further, each figure (Fig. 1 and Fig. 2) shown below is a schematically illustrated view, and the size and shape of each unit are appropriately changed from the actual size and the actual shape in order to facilitate understanding.

Fig. 1 is a schematic cross-sectional view illustrating an example of an ink jet head comprising a nozzle plate. As illustrated in Fig. 1, an ink jet head 100 comprises a nozzle plate 11 having jetting holes (nozzles); and an ink supply unit 20 provided on a side opposite to a side of the nozzle plate 11 in a jetting direction. The nozzle plate 11 is a nozzle plate (silicon nozzle plate) containing silicon. The nozzle plate 11 is provided with a plurality of jetting holes 12 for jetting an ink. A liquid-repellent film 13 containing a fluorinated alkylsilane compound is provided on a jetting surface side of the nozzle plate 11.

Fig. 2 is a perspective view schematically illustrating the jetting surface (surface where the liquid-repellent film 13 is formed) of the nozzle plate 11. As illustrated in Fig. 2, the nozzle plate 11 is formed such that a plurality of jetting holes (nozzles) are two-dimensionally arranged.

The ink supply unit 20 comprises a plurality of pressure chambers 21 that communicate with each of a plurality of jetting holes 12 in the nozzle plate 11 through a nozzle communication passage 22; a plurality of ink supply channels 23 that supply the ink to each of the plurality of pressure chambers 21; a common liquid chamber 25 that supplies the ink to the plurality of the ink supply channels 23; and pressure generation means 30 that deforms each of the plurality of pressure chambers 21.

The ink supply channel 23 is formed between the nozzle plate 11 and the pressure generation means 30 so that the ink supplied to the common liquid chamber 25 is delivered. One end of a supply adjustment passage 24 that is connected to the pressure chamber 21 is connected to this ink supply channel 23 so that the ink can be delivered to the pressure chamber 21 by reducing the amount of the ink to be supplied from the ink supply channel 23 to a required amount. The ink supply channel 23 is provided with a plurality of the supply adjustment passages 24, and the ink is supplied to the pressure chamber 21 provided adjacent to the pressure generation means 30 through the ink supply channel 23.

In this manner, a large amount of the ink can be supplied to a plurality of jetting holes.

The pressure generation means 30 is formed by stacking a vibrating plate 31, an adhesive layer 32, a lower electrode 33, a piezoelectric layer 34, and an upper electrode 35 in order from the pressure chamber 21 side, and an electrical wiring that supplies a driving signal from the outside is connected thereto. In a case where a piezoelectric element is deformed in response to the image signal, the ink is jetted from the nozzles 12 through the nozzle communication passage 22.

Further, a circulation throttling 41 is provided in the vicinity of the jetting holes 12 so that the ink is constantly recovered to a circulation passage 42. In this manner, viscosity improvement of the ink in the vicinity of the jetting holes at the time of non-jetting can be prevented.

As the base material, a paper base material, a resin base material, or the like can be used without particular limitation.

Examples of the paper base material include plain paper, glossy paper, and coated paper.

The glossy paper is a paper base material comprising base paper and polymer fine particles or porous fine particles disposed on the base paper.

Commercially available products of the glossy paper are not particularly limited. Examples of the commercially available products of the glossy paper include "KASSAI (registered trademark)" (manufactured by Fujifilm corporation), photo paper and photo glossy paper (manufactured by Seiko Epson Corporation), and glossy paper (manufactured by Konica Minolta, Inc.).

Coated paper is a paper base material comprising base paper and a coating layer disposed on the base paper.

Commercially available products of the coated paper are not particularly limited. Examples of the commercially available products of the coated paper include "OK TOP COAT (registered trademark) +" (manufactured by Oji Paper Co., Ltd.), and "AURORA COAT" (manufactured by Nippon Paper Industries Co., Ltd.).

From the viewpoint that an image with excellent specular glossiness can be recorded, as the paper base material, glossy paper or coated paper is preferable, and glossy paper is more preferable.

Examples of the resin base material include a resin film.

Examples of the resin in the resin base material (such as a resin film) include a polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene naphthalate, polyethylene, polystyrene, polypropylene, polycarbonate, polyvinyl acetal, and an acrylic resin.

Among these, from the viewpoint that an image with excellent specular glossiness can be recorded, as the resin base material, PVC or PET is preferable, and PET is more preferable.

Further, the base material in the image recording method according to the present embodiment may be a base material on which an image has already been recorded. In other words, the image recording method according to the present embodiment may be a method of recording an image using the ink according to the embodiment of the present disclosure on the image (a so-called recorded image) of the base material, which has already been recorded.

By recording an image using the ink according to the embodiment of the present disclosure on the image which has already been recorded on the base material, decoration with specular glossiness can be added to the image which has already been recorded on the base material. Further, the image which has already been recorded on the base material can be hidden by an image (for example, a silver image) to be recorded using the ink according to the embodiment of the present disclosure.

The image recording method according to the present embodiment may include a step of drying the ink applied to the base material.

The drying may be natural drying at room temperature or heat drying.

In a case where a resin base material is used as the base material, heat drying is preferable.

The means for heat drying is not particularly limited, and examples thereof include a heat drum, warm air, an infrared lamp, and a heat oven.

The temperature for heat drying is preferably 50°C or higher, more preferably in a range of 60°C to 150°C, and still more preferably in a range of 70°C to 100°C.

The time for heat drying can be appropriately set in consideration of the composition of the ink and the amount of the ink to be jetted and is preferably in a range of 1 minute to 180 minutes, more preferably in a range of 5 minutes to 120 minutes, and still more preferably in a range of 5 minutes to 60 minutes.

### Examples

Hereinafter, the present invention will be described in more detail based on the following examples. However, the present invention is not limited to the following examples unless the gist thereof is overstepped.

### <Preparation of metal nanoparticle dispersion liquid A>

As a metal nanoparticle dispersion liquid A, a silver nanoparticle dispersion liquid was prepared. Hereinafter, the details will be described.

### - Preparation of metal nanoparticle-forming liquid A -

A reaction container made of high Cr-Ni-Mo stainless steel (NTKR-4, manufactured by Nippon Metal Industry Co., Ltd.) was prepared. This reaction container comprises an agitator formed by attaching four propellers made of NTKR-4 and four paddles made of NTKR-4 to a shaft made of stainless steel (SUS316L).

While 13 liters (L) of ion exchange water was stirred using the agitator in the reaction container, 10 g/L of a 1.0 L trisodium citrate (anhydride) aqueous solution was added thereto. The temperature of the obtained liquid was maintained to 35°C.

8.0 g/L of a 0.68 L polystyrene sulfonic acid aqueous solution was added to the liquid whose temperature was maintained to 35°C, and 0.041 L of a sodium borohydride aqueous solution in which the concentration of the sodium borohydride was adjusted to 23 g/L was further added thereto. The concentration of the sodium borohydride aqueous solution was adjusted using 0.04 N (mol/L) of a sodium hydroxide (NaOH) aqueous solution.

0.10 g/L of a 13 L silver nitrate aqueous solution was further added to the liquid, to which the sodium borohydride aqueous solution had been added, at a rate of 5.0 L/min.

10 g/L of a 1.5 L trisodium citrate (anhydride) aqueous solution and 11 L of ion exchange water were further added to the obtained liquid, and 80 g/L of a 0.68 L potassium hydroquinone sulfonate aqueous solution was further added thereto.

Next, the rate of the stirring was increased to 800 rpm (round per minute; the same applies hereinafter), 0.10 g/L of a 8.1 L silver nitrate aqueous solution was added to the solution at a rate of 0.95 L/min, and the temperature of the obtained liquid was decreased to 30°C.

Next, 44 g/L of a 8.0 L methyl hydroquinone aqueous solution was added to the resulting liquid cooled to 30°C, and the total amount of the gelatin aqueous solution at 40°C described below was added thereto.

Thereafter, the rate of the stirring was increased to 1200 rpm, the total amount of the silver sulfite white precipitate mixed solution described below was added thereto. The pH of the liquid to which the silver sulfite white precipitate mixed solution had been added was gradually changed.

At the time at which the change in pH of the liquid was stopped, 1 N (mol/L) of a 5.0 L NaOH aqueous solution was added to the resulting liquid at a rate of 0.33 L/min. The pH of the obtained liquid was adjusted to 7.0 ± 1.0 using NaOH and citric acid (anhydride). Next, 2.0 g/L of a 0.18 L sodium 1-(m-sulfophenyl)-5-mercaptotetrazole aqueous solution was added to the liquid after the adjustment of the pH thereof, and 70 g/L of a 0.078 L 1,2-benzisothiazolin-3-one aqueous solution which was dissolved by being adjusted to be alkaline was added thereto.

In the manner described above, a metal nanoparticle-forming liquid A was obtained.

### - Preparation of gelatin aqueous solution -

A dissolution tank made of SUS316L comprising an agitator made of SUS316L was prepared.

16.7 L of ion exchange water was poured into this dissolution tank, and 1.4 kg of alkali-treated bovine bone gelatin (weight-average molecular weight: 200000, measured value according to GPC) which had been subjected to a deionization treatment was added to the dissolution tank while the ion exchange water was stirred using the agitator at a low speed.

0.91 kg of alkali-treated bovine bone gelatin (weight-average molecular weight: 21000, measured value according to GPC) which had been subjected to a deionization treatment, a proteolytic enzyme treatment, and an oxidation treatment with hydrogen peroxide was further added to the obtained liquid.

Thereafter, the temperature of the liquid was increased to 40°C, and the gelatin was allowed to be completely dissolved therein by simultaneously performing swelling and dissolving of the gelatin.

In this manner, a gelatin aqueous solution was obtained.

### - Preparation of silver sulfite white precipitate mixed solution -

A dissolution tank made of SUS316L comprising an agitator made of SUS316L was prepared.

8.2 L of ion exchange water was poured into this dissolution tank, and 100 g/L of a 8.2 L silver nitrate aqueous solution was added thereto.

While the obtained liquid was stirred using the agitator at a high speed, 140 g/L of a 2.7 L sodium sulfite aqueous solution was added thereto in a short time, thereby obtaining a mixed solution containing a white precipitate of silver sulfite (in other words, a silver sulfite white precipitate mixed solution).

This silver sulfite white precipitate mixed solution was prepared immediately before use.

### - Physical characteristics of metal nanoparticle-forming liquid A -

In the physical characteristics of the metal nanoparticle-forming liquid A, the pH thereof at 25°C was 9.4 (the value measured using KR5E (manufactured by AS ONE Corporation)), the electrical conductivity thereof was 8.1 mS/cm (the value measured using CM-25R (manufactured by DKK-TOA Corporation)), and the viscosity thereof was 2.1 mPa·s (the value measured using SV-10 (manufactured by A & D Co., Ltd.)).

The obtained metal nanoparticle-forming liquid A was accommodated in 20 L of a Union Container II type container (a low-density polyethylene container, manufactured by AS ONE Corporation) and stored at 30°C.

### - Preparation of metal nanoparticle dispersion liquid A (desalting treatment and re-dispersing treatment) -

The metal nanoparticle-forming liquid A was subjected to a desalting treatment and a re-dispersing treatment, thereby obtaining a metal nanoparticle dispersion liquid A. The detailed operation is as follows.

800 g of the metal nanoparticle-forming liquid A was collected in a centrifuge tube, and the pH thereof was adjusted to 9.2 ± 0.2 at 25°C using 1 N (0.5 mol/L) of sulfuric acid.

A centrifugation operation was performed on the metal nanoparticle-forming liquid A whose pH had been adjusted, using a centrifuge (himacCR22GIII, using R9A as an angle rotor, manufactured by Hitachi Koki Co., Ltd.) under conditions of 35°C at 9000 rpm for 60 minutes, and 784 g of the supernatant liquid was disposed of. 0.2 mmol/L of a NaOH aqueous solution was added to the remaining solid (in other words, a solid containing metal nanoparticles and gelatin) such that the total amount thereof was set to 400 g, and the solution was stirred by hand using a stirring rod, thereby obtaining a crude dispersion liquid X.

By performing this operation, 24 crude dispersion liquids X were prepared, and all of these crude dispersion liquids X (in other words, 9600 g in total) were added to a tank made of SUS316L and mixed. Next, 10 mL of a 10 g/L solution (as the solvent, a mixed solution of methanol and ion exchange water at a volume ratio of 1:1 was used) containing Pluronic 31R1 (nonionic surfactant, manufactured by BASF SE) was further added thereto.

Next, a batch type dispersing treatment was performed on the mixture of the crude dispersion liquids X in the tank at 9000 rpm for 120 minutes using an automixer 20 type (manufactured by PRIMIX Corporation) (a homomixer MARKII as a stirring unit). The liquid temperature during the dispersion was maintained at 50°C.

After the dispersion, the temperature of the solution was decreased to 25°C, and single pass filtration was performed using a Profile II filter (product type: MCY1001Y030H13, manufactured by Pall Corporation).

800 g of the solution filtered in the above-described manner (in other words, the filtrate) was collected in a centrifuge tube, a centrifugation operation was performed on the collected filtrate, using the centrifuge under conditions of 35°C at 9000 rpm for 60 minutes, and 784 g of the supernatant liquid was disposed of. 0.2 mmol/L of a NaOH aqueous solution was added to the remaining solid (in other words, a solid containing metal nanoparticles and gelatin) such that the total amount thereof was set to 40 g, and the solution was stirred by hand using a stirring rod, thereby obtaining a crude dispersion liquid Y.

By performing this operation, 120 crude dispersion liquids Y were prepared, and all of these crude dispersion liquids Y (in other words, 4800 g in total) were added to a tank made of SUS316L and mixed. Next, 5 mL of a 10 g/L solution (as the solvent, a mixed solution of methanol and ion exchange water at a volume ratio of 1:1 was used) containing Pluronic 31R1 (nonionic surfactant, manufactured by BASF SE) was further added thereto.

Next, a batch type dispersing treatment was performed on the mixture of the crude dispersion liquids Y in the tank at 9000 rpm for 120 minutes using an automixer 20 type (manufactured by PRIMIX Corporation) (a homomixer MARKII as a stirring unit). The liquid temperature during the dispersion was maintained at 50°C.

By performing the operation described above, a desalting treatment and a re-dispersing treatment were performed on the metal nanoparticle-forming liquid A, thereby obtaining a metal nanoparticle dispersion liquid A.

### - Physical characteristics of metal nanoparticle dispersion liquid A and content of metal nanoparticles -

In the physical characteristics of the metal nanoparticle dispersion liquid A, the pH thereof at 25°C was 7.0 (the value measured using KR5E (manufactured by AS ONE Corporation)), the electrical conductivity thereof was 0.08 mS/cm (the value measured using CM-25R (manufactured by DKK-TOA Corporation)), and the viscosity thereof was 7.4 mPa·s (the value measured using SV-10 (manufactured by A & D Co., Ltd.)).

Further, the content of the metal nanoparticles in the metal nanoparticle dispersion liquid A was 10% by mass with respect to the total amount of the metal nanoparticle dispersion liquid A, and the content of gelatin was 1% by mass with respect to the total amount of the metal nanoparticle dispersion liquid A.

The obtained metal nanoparticle-forming liquid A was accommodated in 20 L of a Union Container II type container and stored at 30°C.

### - Shape of metal nanoparticles -

After the metal nanoparticle dispersion liquid A was diluted, the liquid was added dropwise onto a grid mesh for a light microscope (for an optical microscope) and dried, thereby preparing a sample for observation. The shape of the metal nanoparticles contained in the metal nanoparticle dispersion liquid A was confirmed by observing the prepared sample for observation using a transmission electron microscope (TEM). As the result, the shape was tabular as listed in Table 1.

### - Average equivalent circle diameter of metal nanoparticles -

TEM images of the sample for observation obtained by performing observation using a transmission electron microscope (TEM) were taken in image treatment software ImageJ (provided by National Institutes of Health (NIH)) to carry out an image treatment.

More specifically, image analysis was performed on 500 pieces of metal nanoparticles optionally extracted from the TEM images with several visual fields, and the diameters of equivalent circles having the same area were calculated. The average equivalent circle diameter of the metal nanoparticles was acquired by simply averaging (number average) the diameters of the equivalent circles having the same area of the obtained 500 pieces of metal nanoparticles.

The results are listed in Table 1.

### - Average thickness of metal nanoparticles -

The metal nanoparticle dispersion liquid A was added dropwise onto a silicon substrate and dried to obtain a sample for observation.

Using this sample for observation, the thicknesses of 500 pieces of metal nanoparticles contained in the metal nanoparticle dispersion liquid A were respectively measured according to a focused ion beam-transmission electron microscopy (FIB-TEM) method.

The average thickness of the metal nanoparticles was acquired by simply averaging (number average) the thicknesses of 500 pieces of the metal nanoparticles.

The results are listed in Table 1.

### - Average aspect ratio of metal nanoparticles -

The average aspect ratio of the metal nanoparticles was acquired by dividing the average equivalent circle diameter of the metal nanoparticles by the average thickness of the metal nanoparticles.

The results are listed in Table 1.

### <Preparation of metal nanoparticle dispersion liquids B to F>

Metal nanoparticle dispersion liquids B to F were respectively prepared in the same manner as the preparation of the metal nanoparticle dispersion liquid A except that the amount of "0.10 g/L of a 13 L silver nitrate aqueous solution" to be added and the timing of addition of "1 N (mol/L) of a 5.0 L sodium hydroxide (NaOH) aqueous solution" in the "- preparation of metal nanoparticle-forming liquid" described above were changed.

Each of the metal nanoparticle dispersion liquids B to F was measured and confirmed in the same manner as that for the metal nanoparticle dispersion liquid A.

The results are listed in Table 1.

### <Preparation of metal nanoparticle dispersion liquid G>

A gold nanoparticle dispersion liquid was prepared as a metal nanoparticle dispersion liquid G.

Specifically, first, a metal nanoparticle-forming liquid G was prepared according to the method described in "Tailoring the synthesis and heating ability of gold nanoprisms for bioapplications", Pelaz et al., Langmuir 2012, 28, p. 8965 to 8970, and a desalting treatment and a re-dispersing treatment were performed on the metal nanoparticle-forming liquid G in the same manners as those for the desalting treatment and the re-dispersing treatment performed in the preparation of the metal nanoparticle dispersion liquid A, thereby obtaining a metal nanoparticle dispersion liquid G.

The metal nanoparticle dispersion liquid G was measured and confirmed in the same manner as that for the metal nanoparticle dispersion liquid A.

The results are listed in Table 1.

In the preparation of the metal nanoparticle dispersion liquids B to D, specifically, the timing of addition of "1 N (mol/L) of a 5.0 L sodium hydroxide (NaOH) aqueous solution" was advanced (for example, "1 N (mol/L) of a 5.0 L sodium hydroxide (NaOH) aqueous solution" was added before the change in pH of the liquid to which the silver sulfite white precipitate mixed solution had been added was stopped) so that the thickness was increased and the average aspect ratio was decreased.

Further, in the preparation of the metal nanoparticle dispersion liquid E or F, specifically, the amount of "0.10 g/L of a 13 L silver nitrate aqueous solution" to be added was reduced so that the average equivalent circle diameter of metal nanoparticles to be formed was increased and the average aspect ratio was increased.

### <Preparation of metal nanoparticle dispersion liquid H>

As a metal nanoparticle dispersion liquid H, a silver nanocolloid H-1 liquid (manufactured by Mitsubishi Materials Corporation) was used. The silver nanoparticles contained in the silver nanocolloid H-1 liquid were spherical particles having an average particle diameter of 20 nm.

**[Table 1]**

| Dispersion liquid | Metal nanoparticles | | | | | | Dispersant | |
|---|---|---|---|---|---|---|---|---|
| | Metal | Shape | Average equivalent circle diameter (nm) | Average thickness (nm) | Average aspect ratio | Amount with respect to total amount of dispersion liquid (% by mass) | Type | Amount with respect to total amount of dispersion liquid (% by mass) |
| A | Ag | Tabular | 120 | 9 | 13.3 | 10 | Gelatin | 1 |
| B (for comparison) | Ag | Tabular | 55 | 20 | 2.8 | 10 | Gelatin | 1 |
| C | Ag | Tabular | 80 | 20 | 4.0 | 10 | Gelatin | 1 |
| D | Ag | Tabular | 80 | 9 | 8.9 | 10 | Gelatin | 1 |
| E | Ag | Tabular | 200 | 10 | 20.0 | 10 | Gelatin | 1 |
| F | Ag | Tabular | 230 | 9 | 25.5 | 10 | Gelatin | 1 |
| G | Au | Tabular | 170 | 9 | 18.9 | 10 | PEG | 1 |
| H (for comparison) | Ag | Spherical | 20 | 20 | 1.0 | 20 | - | - |

In Table 1, the "metal nanoparticle dispersion liquid" was noted as a "dispersion liquid".

Further, "PEG" in Table 1 is an abbreviation standing for "polyethylene glycol".

In Table 1, "-" indicates that the corresponding one is not available.

### [Example 1]

### <Preparation of ink>

An ink with the following composition was prepared using the metal nanoparticle dispersion liquid A, an organic solvent (propylene glycol), SURFLON (registered trademark) S-243 (manufactured by AGC SEIMI CHEMICAL CO., LTD., fluorine-based surfactant), and ion exchange water.

### - Composition of ink -

| | |
|---|---|
| • Metal nanoparticles | 5% by mass |
| • Gelatin | 0.5% by mass |
| (a mixture containing alkali-treated bovine bone gelatin having a weight-average molecular weight of 200000 and alkali-treated bovine bone gelatin having a weight-average molecular weight of 21000) | |
| • Propylene glycol | 30% by mass |
| (PG: an organic solvent having a boiling point of 188°C and an SP value of 27.6 (MPa)^{1/2}) | |
| • SNOWTEX (registered trademark) XS | 0.1% by mass |
| (colloidal silica, average particle diameter (volume average particle diameter) of silica particles: 5 nm, shape of silica particles: sphere, manufactured by Nissan Chemical Corporation) | |
| • SURFLON (registered trademark) S-243 | 0.14% by mass |
| (a fluorine-based surfactant containing a perfluoro group, refractive index = 1.35, manufactured by AGC SEIMI CHEMICAL CO., LTD.) | |
| • Ion exchange water remaining amount set such that the total amount of the composition was 100% by mass | |

### <Shape and size of metal nanoparticles contained in ink>

The shape and the sizes (specifically, the shape, the average equivalent circle diameter, the average thickness, and the average aspect ratio) of the metal nanoparticles contained in the ink were confirmed in the same manners as those for the shape and the sizes of the metal nanoparticles contained in the metal nanoparticle dispersion liquid A.

The results are listed in Table 2.

### [Evaluation]

### 1. Liquid repellency

A test piece for evaluation on which a liquid-repellent film (SAM film: self-assembly monolayer) was formed was prepared on a silicon plate having a size of 2 cm × 2 cm using a fluorinated alkylsilane compound.

30 mL of each ink prepared in the above-described manner was weighted using 50 mL of a wide-mouthed bottle (50 mL of aiboy wide-mouthed bottle, manufactured by AS ONE Corporation) made of polypropylene. Next, the test piece was immersed in the ink and heated temporarily while the ink was stirred at 60°C for 24 hours. The test piece was taken out and washed with ultrapure water, and the contact angle of the surface of the liquid-repellent film with water was measured.

The contact angle of water was measured in an environment of 25°C at 50%RH using a contact angle measuring device (DM-500, manufactured by Kyowa Interface Science, Inc.) according to a method of the related art. During the measurement, ultrapure water was used as water. Based on the obtained measured value of the contact angle of water, the impact of the liquid-repellent film on the liquid repellency due to the ink was evaluated according to the following evaluation standards.

Further, the contact angle of the surface of the liquid-repellent film with water before immersion in the ink was 106.5°.

In the following evaluation standards, "S" indicates that the liquid repellency is most excellent. Further, "S", "A", or "B" is in an acceptable level in practical use.

### ∼ Evaluation standards ∼

S: The contact angle of water was 80° or greater.
A: The contact angle of water was 60° or greater and less than 80°.
B: The contact angle of water was 40° or greater and less than 60°.
C: The contact angle of water was 20° or greater and less than 40°.
D: The contact angle of water was less than 20°.

### 2. Jetting reliability

The ink jet head comprising a silicon nozzle plate as illustrated in Fig. 1 was fixed such that the movement direction of a stage was in a direction perpendicular to the nozzle arrangement direction. Further, a liquid-repellent film was provided on the silicon nozzle plate in advance using a fluorinated alkylsilane compound.

Next, a storage tank connected to the ink jet head was filled with the ink prepared in the above-described manner. Further, Kassai photofinishing product Pro (manufactured by Fujifilm Corporation) serving as a recording medium was attached to the stage moving in a direction perpendicular to the nozzle arrangement direction of the head.

Next, the stage was allowed to move at 248 mm/min, and 2000 ink droplets per nozzle were jetted in parallel with the transport direction to form 96 lines under jetting conditions of an ink droplet amount of 3.4 pL, a jetting frequency of 10 kHz, and a resolution of 75 × 1200 dpi (dot per inch; the same applies hereinafter) for the nozzle arrangement direction × the transport direction, thereby preparing a print sample. It was confirmed that the ink was jetted from all nozzles as the result of visual observation of the obtained print sample. After the ink was jet, the sample was allowed to stand in the same state for 5 minutes. A period from the attachment of the recording medium to allowing the sample to stand for 5 minutes was set to one cycle.

As the next cycle, a new recording medium was attached to the stage, and the ink was jet under the same conditions again to prepare a print sample. Such a cycle was repeated and 2000 ink droplets were jetted to verify the maximum number of cycles that all 96 nozzles were able to eject. Based on that number, the jetting reliability was evaluated according to the following evaluation standards.

In the following evaluation standards, "S" indicates that the jetting reliability is most excellent. Further, "S", "AA", "A", or "B" is in an acceptable level in practical use.

### ∼ Evaluation standards ∼

S: The number of cycles was 12 or greater.
AA: The number of cycles was 10 or greater and less than 12.
A: The number of cycles was 8 or greater and less than 10.
B: The number of cycles was 6 or greater and less than 8.
C: The number of cycles was 4 or greater and less than 6.
D: The number of cycles was less than 4.

### 3. Evaluation of image

### (Image recording)

The ink jet head comprising a silicon nozzle plate as illustrated in Fig. 1 was prepared, and a storage tank connected to this ink jet head was filled with the ink prepared in the above-described manner. Further, a liquid-repellent film was provided on the silicon nozzle plate in advance using a fluorinated alkylsilane compound.

Glossy paper (Kassai (registered trademark) photofinishing product Pro (manufactured by Fujifilm Corporation)) serving as a base material was attached to the stage moving in a direction perpendicular to the nozzle arrangement direction of the head. Specifically, the base material was fixed onto the stage which was movable in a predetermined linear direction at 500 mm/sec, and the stage temperature was maintained at 30°C. thereafter, the ink jet head was fixedly disposed such that a direction of the line head (in other words, the main scanning direction) in which nozzles were arranged was inclined at 75.7° with respect to the direction orthogonal to the movement direction of the stage (in other words, the sub scanning direction), and the ink was jetted according to a line system under jetting conditions of an ink droplet amount of 2.4 pL, a jetting frequency of 24 kHz, and a resolution of 1200 dpi × 1200 dpi (dot per inch; the same applies hereinafter) while the base material was allowed to move in the sub scanning direction at a constant speed to record a solid image with a size of 2 cm square. After the recording, the solid image was completely dried.

### (1) Tint of image

Using a SpectroEye spectrophotometer (manufactured by Sakata Inx Eng. Co., Ltd.), a* and b* of the solid image were measured, and the metric saturation was calculated by Calculation Formula (a*² + b*²)^{1/2} based on the obtained results. Based on the obtained metric saturation, the tint of the image was evaluated according to the following evaluation standards.

As the value of the metric saturation is smaller, this indicates that the tint of the image is suppressed (that is, the image is a neutral image). In other words, in the following evaluation standards, "S" indicates that the tint of the image is most suppressed. Further, "S", "AA", "A", or "B" is in an acceptable level in practical use.

### ∼ Evaluation standards ∼

S: The metric saturation value was less than 1.
AA: The metric saturation value was 1 or greater and less than 3.
A: The metric saturation value was 3 or greater and less than 5.
B: The metric saturation value was 5 or greater and less than 10.
C: The metric saturation value was 10 or greater.

### (2) Specular glossiness of image

### (2-1) Evaluation based on gloss value

The 20° gloss value and 60° gloss value of the solid image were measured using a gloss watch (micro-TRI-gloss, manufactured by BYK-Chemie GmbH). Based on the obtained measured values of the 20° gloss value and 60° gloss value, the specular glossiness of the image was evaluated according to the following evaluation standards.

As the both of the 20° gloss value and 60° gloss value are increased, this means that the specular glossiness is excellent. In other words, in the following evaluation standards, "S" indicates that the specular glossiness of the image is most excellent. Further, "S", "AA", "A", or "B" is in an acceptable level in practical use.

### ∼ Evaluation standards (20°gloss value) ∼

S: The 20°gloss value was 1000 or greater.
AA: The 20° gloss value was 800 or greater and less than 1000.
A: The 20° gloss value was 600 or greater and less than 800.
B: The 20° gloss value was 400 or greater and less than 600.
C: The 20° gloss value was 200 or greater and less than 400.
D: The 20° gloss value was less than 200.

### ∼ Evaluation standards (60° gloss value) ∼

S: The 60° gloss value was 1000 or greater.
AA: The 60° gloss value was 800 or greater and less than 1000.
A: The 60° gloss value was 600 or greater and less than 800.
B: The 60° gloss value was 400 or greater and less than 600.
C: The 60° gloss value was 200 or greater and less than 400.
D: The 60° gloss value was less than 200.

### (2-2) Sensory evaluation

The specular glossiness of the solid image was evaluated by visually observing the image. The evaluation standards are as follows.

In the following evaluation standards, "S" indicates that the specular glossiness is most excellent. Further, "S", "AA", or "A" is in an acceptable level in practical use.

### ∼ Evaluation standards ∼

S: The image had extremely excellent specular glossiness, and the reflected object was clearly seen like a mirror image.
AA: The image had excellent specular glossiness, and the reflected image was able to be identified.
A: The image had specular glossiness, but the reflected object was not able to be identified.
B: The image had weak metallic tone gloss, but did not have specular glossiness, and an object was not reflected.
C: The image did not have gloss and was seen to be gray.

### [Examples 2 to 15 and Comparative Examples 1 to 4]

The same operation was performed as in Example 1 except that a combination of the kind of the metal nanoparticle dispersion liquid, the amount of the metal nanoparticles with respect to the total amount of the ink, the kind of the silicon compound, and the amount of the silicon compound with respect to the total amount of the ink was changed to the combination listed in Table 2 shown below.

The results are listed in Table 2.

In all examples, the content of the organic solvent with respect to the total amount of the ink was set to 30% by mass. Further, the amount of the metal nanoparticles with respect to the total amount of the ink was changed by changing the amount of the metal nanoparticle dispersion liquid to be used.

**[Table 2]**

| | Ink | | | | | | | | | Evaluation results | | | | | |
|---|---|---|---|---|---|---|---|---|---|---|---|---|---|---|---|
| | Metal nanoparticles | | | | | | | Silicon compound | | Liquid repellency | Jetting reliability | Tint of image | Specular glossiness of image | | |
| | Dispersion liquid | Metal | Shape | Average equivalent circle diameter (nm) | Average thickness (nm) | Average aspect ratio | Amount with respect to total amount of ink (% by mass) | Type | Amount with respect to total amount of ink (% by mass) | | | | 20° gloss value | 60° gloss value | Sensory evaluation |
| Example 1 | A | Ag | Tabular | 120 | 9 | 13.3 | 5 | Colloidal silica | 0.1 | S | S | AA | S | AA | AA |
| Example 2 | C | Ag | Tabular | 80 | 20 | 4.0 | 5 | Colloidal silica | 0.1 | S | AA | B | A | A | A |
| Example 3 | D | Ag | Tabular | 80 | 9 | 8.9 | 5 | Colloidal silica | 0.1 | S | AA | A | AA | A | A |
| Example 4 | E | Ag | Tabular | 200 | 10 | 20.0 | 5 | Colloidal silica | 0.1 | S | AA | S | S | S | S |
| Example 5 | F | Ag | Tabular | 230 | 9 | 25.5 | 5 | Colloidal silica | 0.1 | S | AA | S | S | AA | AA |
| Example 6 | G | Au | Tabular | 170 | 9 | 18.9 | 5 | Colloidal silica | 0.1 | S | A | A | A | A | A |
| Example 7 | A | Ag | Tabular | 120 | 9 | 13.3 | 5 | Colloidal silica | 0.005 | B | B | AA | S | S | S |
| Example 8 | A | Ag | Tabular | 120 | 9 | 13.3 | 5 | Colloidal silica | 0.02 | A | AA | AA | S | S | S |
| Example 9 | A | Ag | Tabular | 120 | 9 | 13.3 | 5 | Colloidal silica | 1 | S | S | AA | A | A | A |
| Example 10 | A | Ag | Tabular | 120 | 9 | 13.3 | 5 | Colloidal silicate | 4 | S | A | A | A | B | A |
| Example 11 | A | Ag | Tabular | 120 | 9 | 13.3 | 5 | Sodium silica | 0.1 | S | AA | A | AA | A | A |
| Example 12 | A | Ag | Tabular | 120 | 9 | 13.3 | 0.8 | Colloidal silica | 0.1 | S | AA | A | A | B | A |
| Example 13 | A | Ag | Tabul ar | 120 | 9 | 13.3 | 2 | Colloidal silica | 0.1 | S | AA | A | AA | A | A |
| Example 14 | A | A g | Tabular | 120 | 9 | 13.3 | 7 | Colloidal silica | 0.1 | A | A | AA | AA | AA | AA |
| Example 15 | A | Ag | Tabular | 120 | 9 | 13.3 | 10 | Colloidal silica | 0.1 | B | B | AA | AA | AA | AA |
| Comparative Example 1 | A | Ag | Tabular | 120 | 9 | 13.3 | 5 | - | - | D | D | A | AA | AA | A |
| Comparative Example 2 | B | Ag | Tabular | 55 | 20 | 2.8 | 5 | Colloidal silica | 0.1 | A | A | C | B | C | C |
| Comparative Example 3 | H | Ag | Spherical | 20 | 20 | 1.0 | 5 | - | - | C | C | C | B | C | B |
| Comparative Example 4 | H | Ag | Spherical | 20 | 20 | 1.0 | 5 | Colloidal silica | 0.1 | A | A | C | C | D | C |

In Table 2, the "metal nanoparticle dispersion liquid" was noted as "dispersion liquid".

In Table 2, "-" indicates that the corresponding one is not available.

As shown in Table 2, in each of the inks of Examples 1 to 15 which contained tabular metal nanoparticles (in other words, the specific tabular metal nanoparticles) having an average aspect ratio of 3 or greater, a silicon compound, and water, the jetting reliability of the ink was excellent. Further, according to the inks of Examples 1 to 15, images with specular glossiness were able to be recorded.

Further, in the inks of Examples 1 to 15, it was found that the liquid repellency of the liquid-repellent film formed using a fluorinated alkylsilane compound was unlikely to be degraded. Further, the images recorded using the inks of Examples 1 to 15, the tint was suppressed.

On the contrary, the ink of Comparative Example 1 which did not contain a silicon compound, the jetting reliability of the ink was low and the liquid repellency of the liquid-repellent film was significantly low, compared to the inks (for example, the ink of Example 1) containing a silicon compound.

The image recorded using the ink of Comparative Example 2 in which the average aspect ratio of the tabular metal nanoparticles was less than 3 did not have specular glossiness, and a tint was generated.

The images recorded using the inks of Comparative Examples 3 and 4 in which the metal nanoparticles had a spherical shape did not have specular glossiness, and a tint was generated.

The entirety of the disclosure of JP2017-024052 filed on February 13, 2017 is incorporated in the present specification by reference.

All documents, patent applications, and technical standards described in the present specification are incorporated herein by reference to the same extent as in a case of being specifically and individually noted that individual documents, patent applications, and technical standards are incorporated by reference.

## Claims

1. An ink jet ink composition comprising:
tabular metal nanoparticles having an average aspect ratio of 3 or greater, which is a ratio of an average equivalent circle diameter to an average thickness;
a silicon compound; and
water.

2. The ink jet ink composition according to claim 1,
wherein an average equivalent circle diameter of the tabular metal nanoparticles is in a range of 10 nm to 500 nm.

3. The ink jet ink composition according to claim 1 or 2,
wherein the average aspect ratio of the tabular metal nanoparticles is 10 or greater.

4. The ink jet ink composition according to any one of claim 1 to 3,
wherein the tabular metal nanoparticles contain at least one metal element selected from the group consisting of silver, gold, and platinum.

5. The ink jet ink composition according to any one of claims 1 to 4,
wherein the tabular metal nanoparticles contain silver.

6. The ink jet ink composition according to any one of claims 1 to 5,
wherein a content of the tabular metal nanoparticles is in a range of 1% by mass to 8% by mass with respect to a total amount of the ink jet ink composition.

7. The ink jet ink composition according to any one of claims 1 to 6,
wherein the silicon compound contains colloidal silica.

8. The ink jet ink composition according to any one of claims 1 to 7,
wherein a content of the silicon compound is in a range of 0.01% by mass to 3% by mass with respect to a total amount of the ink jet ink composition.

9. The ink jet ink composition according to any one of claims 1 to 8, further comprising:
gelatin.

10. The ink jet ink composition according to any one of claims 1 to 9, which is used for recording a decorative image.

11. A recorded material comprising:
a base material; and
an image which is disposed on the base material and contains tabular metal nanoparticles having an average aspect ratio of 3 or greater, which is a ratio of an average equivalent circle diameter to an average thickness, and a silicon compound.

12. An image recording method comprising:
a step of applying the ink jet ink composition according to any one of claims 1 to 10 onto a base material using a jet head containing silicon according to an ink jet method.
